# EUROPEAN PATENT APPLICATION

(11) **EP 1 775 972 A1**
(43) Date of publication of application: **18.04.2007**
(21) Application number: 05765143.2
(22) Date of filing: 27.06.2005
(51) Int. Cl.: H04Q 7/22, H04L 12/56

(54) **COMMUNICATION HANDOVER METHOD, COMMUNICATION MESSAGE PROCESSING METHOD, AND COMMUNICATION CONTROL METHOD**

(30) Priority: 30.06.2004 JP 2004194374
(71) Applicant: MATSUSHITA ELECTRIC INDUSTRIAL CO., LTD., Osaka 571-8501 (JP)
(72) Inventor: KASAPIDIS, Makis Matsushita Electric Ind. Co. Ltd., Chuo-ku, Osaka-shi Osaka 540-6319 (JP)
(74) Representative: Jackson, Martin Peter
(86) International application number: PCT/JP2005/011722
(87) International publication number: WO 2006/003859

(57) **Abstract**

There is disclosed a technique whereby, in a case wherein a mobile node (MN) performs a handover, between access points (APs) present on the links of different access routers (ARs), security is quickly established between the MN and the AP so as to reduce the possibility of a communication delay or disconnection due to the handover. According to this technique, before performing a handover, the MN 10 transmits, to an access router (nAR) 30 that is to be newly connected after the handover, a notification indicating an MAC address for the MN and a communication encryption/decryption key used with the AP 21 before the handover, and the nAR transmits a notification for this information to the AP 31, to which the MN is to be connected after the handover. Therefore, the MN can employ the communication encryption/decryption key used before the handover and communicate with the AP after the handover. Furthermore, by using a process associated with the FMIP, a notification indicating the MAC address of the MN and the communication encryption/decryption key can be transmitted to the nAR.

## Description

### TECHNICAL FIELD

The present invention relates to a communication handover method, a communication message processing method and a communication control method, and particularly to a communication handover method, a communication message processing method and a communication control method for a communication system that achieves a security countermeasure for communication performed between a mobile node and an access point in a wireless LAN system.

### BACKGROUND ART

Recently, technology for accessing a network using a mobile node (hereinafter written as an MN), which employs a wireless LAN (Local Area Network), has been developed. For example, an MN can be connected to an access point (hereinafter written as an AP) by employing a wireless system, such as IEEE (Institute of Electrical and Electronics Engineers) 802.11, and can access an external IP network, such as the Internet, through an access router (hereinafter written as an AR) that is located at a higher rank than the AP. '

However, since a LAN environment is constructed without any physical wiring being required, wireless LAN communication is performed in an environment wherein a third party can easily intercept communications or gain unauthorized access to a network. As a security countermeasure for this environment, techniques have been developed for achieving strong security, such as IEEE 802.1x (see non-patent document 1 below).

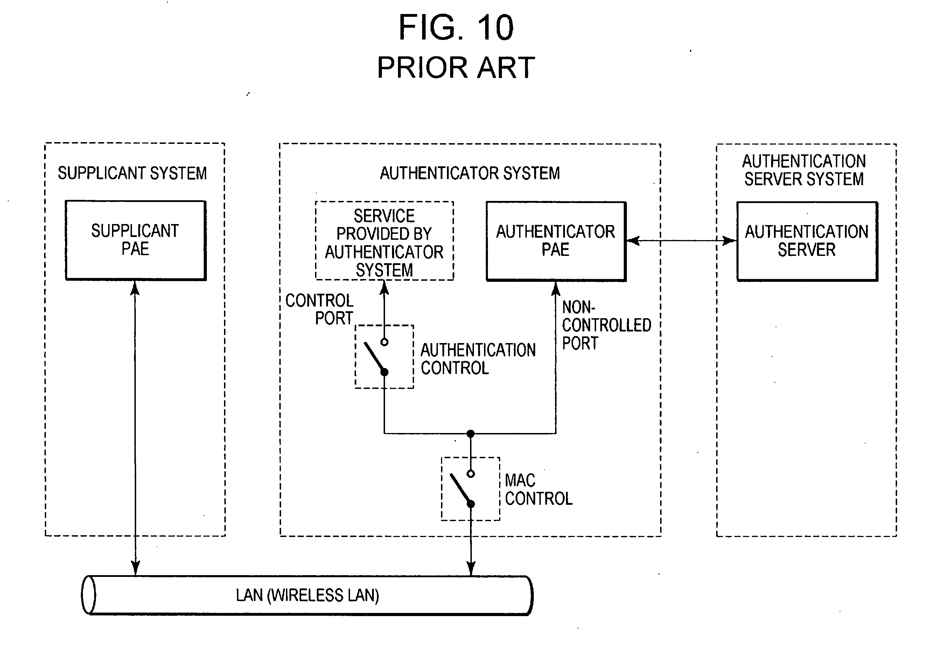

IEEE 802.1x is a technique whereby, when an MN accesses an AP, port control (port access control) is performed using RADIUS (Remote Authentication Dial-In User Service) or EAP (Extensible Authentication Protocol). Fig. 10 is a diagram showing an overview of the port control provided by IEEE 802.1x, according to related art (see chapter 6 of non-patent document 1 below). In Fig. 10, a supplicant system, an authenticator system and an authentication server system are shown. It should be noted that the supplicant system, the authenticator system and the authentication server system correspond respectively to an ,MN, which serves as an access client, and AP and RADIUS server systems that serve as access servers.

The supplicant system mounts a supplicant PAE (Port Access Entity), which is software required by an access client in order to obtain an authentication conforming to IEEE 802.1x. Furthermore, the authenticator system mounts an authenticator PAE. This authenticator PAE can be connected through a non-control port to the supplicant system that gains access via a LAN (wireless LAN), and can also communicate with the authentication server of the authentication server system. When the supplicant system is authorized by the authentication server, the authenticator PAE performs port control, so that the supplicant system can obtain, through a control port, for example, a predetermined service such as an Internet access service. It should be noted that the authenticator system can also examine the MAC (Media Access Control) address of the supplicant system and perform port control, so that the supplicant system is inhibited from being connected to both the control port and a non-control port.

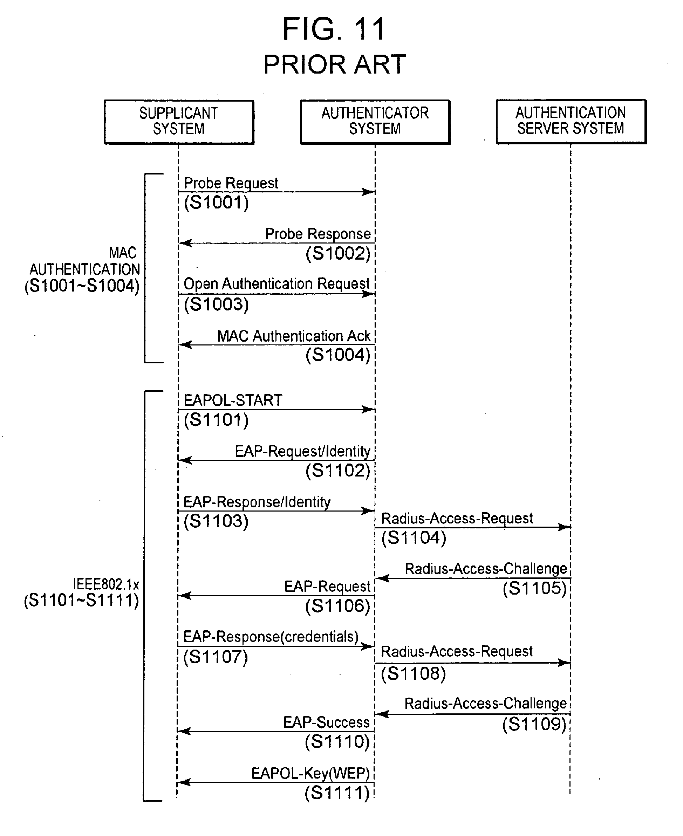

Further, Fig. 11 is a sequence chart showing an example operation, for the arrangement in Fig. 10, when a supplicant system obtains a predetermined service via the authenticator. It should be noted that an explanation will be given by employing, as an example, an operation related to authentication that uses EAP and RADIUS.

The operation shown in the sequence chart in Fig. 11 is roughly separated into a first half (steps S1001 to S1004), for MAC authentication, and a second half (steps S1101 to S1111), for an authentication based on IEEE 802.1x. First, when the supplicant system is connected to the authenticator system (i.e., when the MN is connected to the AP), as a Probe Request, the supplicant system transmits to the authenticator system an SSID (Service Set ID) to be used, and a communication speed (step S1001), and as a Probe Response, which is a reply to the request, the authenticator system transmits to the supplicant system a communication speed to be used (step S1002). Sequentially, then, the supplicant system transmits an MAC address as an Open Authentication Request to the authenticator system (step S1003), and the authenticator system acknowledges reception of the MAC address and transmits to the supplicant system an MAC Authentication Ack indicating that a radio network can be normally employed (step S1004).

Following this, the supplicant system transmits to the authenticator system an EAPOL-START, which is a request for the start of the EAP (step S1101), and the authenticator system transmits an EAP-Request/Identity to the supplicant system, and thus starts the EAP (step S1102). In response to the start of the EAP, the supplicant system transmits to the authenticator system, an EAP-Response/Identity that includes the ID (identification information) of the supplicant system (step S1103), and the authenticator system transfers this information as a Radius-Access-Request to the authentication server system (step S1104). As a Radius-Access-Challenge, the authentication server system transmits to the authenticator system a request for transmission of a certificate for the supplicant system and a certificate for the authentication server system (step S1105), and the authenticator system transfers this information as an EAP-Request to the supplicant system (step S1106).

Next, the supplicant system transmits to the authenticator system an EAP-Response (credentials) that includes a certificate representing an authorized client (step S1107), and the authenticator system transfers this information as a Radius-Access-Request to the authentication server system (step S1108). The authentication server system then performs a predetermined authentication process to authorize the supplicant system, and as a Radius-Access-Challenge, transmits to the authenticator system information indicating the authentication has been successful and information that is the basis for a communication encryption/decryption key (step S1109). The authenticator system transmits to the supplicant system an EAP-Success indicating that the authentication has been successful (step S1110), and generates a communication encryption/decryption key (here, an EAPOL-Key (WEP)) and transmits it to the supplicant system (step S1111).

Through the above described operation, a communication encryption/decryption key, which is employed for the radio network between the supplicant system and the authenticator system, is generated and used in common. Furthermore, the authenticator system controls ports, so that access to a predetermined service through the control port is provided for a supplicant system that has been authenticated. Although this was not explained during the above operation, for example, a message related to the acknowledgement of an available encryption/compression system, such as TLS (Transport Layer Security), is also exchanged between the supplicant system and the authentication server system.

On the other hand, security based on IEEE 802.1x, which is described above, is obtained each time an MN is connected to an AP. Therefore, in a case wherein an MN accesses a new AP, the series of operations shown in Fig. 10 must be performed, and for example, in a case where there is a handover for the switching of a connection to a different AP (especially in a case where there is present a session currently being processed, etc., for which real time communication is requested) a delay or a communication disconnect could occur each time there is a handover.

While taking this problem into account, for example, in patent document 1 below is disclosed a technique whereby, in a network configuration shown in Fig. 12, an authentication server 903 distributes, to an AP 902, an encryption/decryption key for communication between an MN 900 and an AP 901, and in the case of a handover during which the MN 900 is switched between the APs 901 and 902, the MN 900 employs the communication encryption/decryption key used before the handover and engages in radio communication with the AP 902, at the handover destination, until a new communication ericryption/decryption key is distributed as a result of an authentication. According to this technique, even in the case wherein authentication for the MN 900 is required each time the MN 900 is connected to the AP 901 or 902, communication between the MN 900 and the AP 901 or 902 can be prevented from being disconnected because of the authentication process required at the time of a handover, during which the MN 900 is switched between the APs 901 and 902.

Furthermore, in non-patent document 2 below, described is a technique (normally called FMIP (Fast Mobile IP)) whereby, before a handover, an MN forms a CoA (Care of Address) that is to be confirmed by a sub-net to be connected after the handover, so that communication can be rapidly resumed immediately after the handover.
Non-patent Document 1: IEEE Std 802.1X-2001, "IEEE Standard for Local and Metropolitan Area Networks - Port-Based Network Access Control", published 13 July 2001
Non-patent Document 2: Rajeev Koodli, "Fast Handovers for Mobile IPv6", draft-ietf-mobileip-fast-mipv6-08, October 2003
Patent Document 1: Japanese Patent Application Publication 2003-259417 (Fig. 1, Fig. 14, Paragraphs 0074 to 0079)

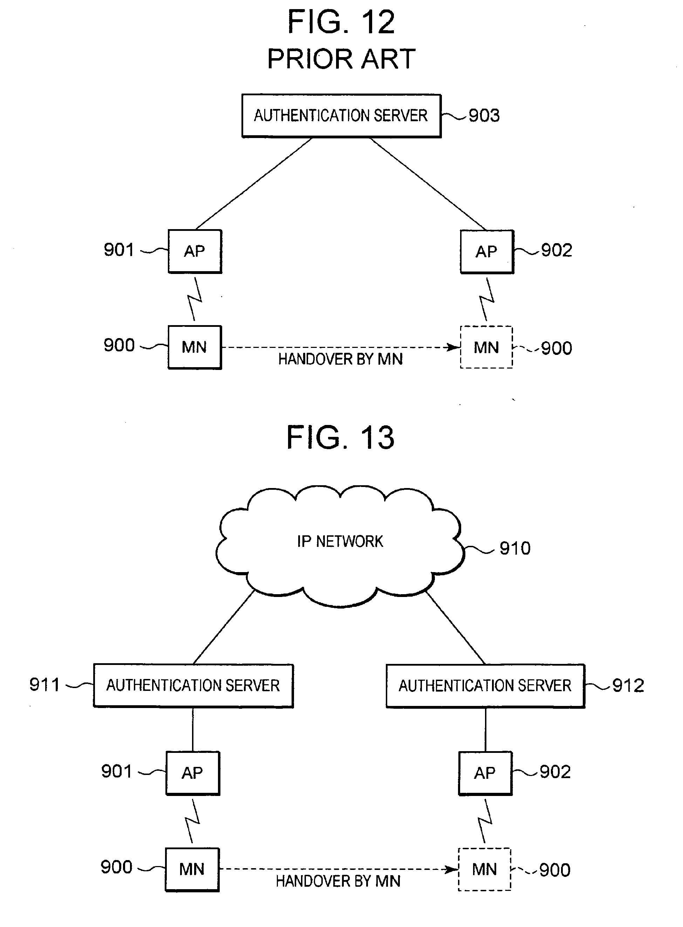

The technique disclosed in patent document 1 is useful for a network configuration wherein a plurality of APs are managed by the same authentication server (or authentication servers operated by the same administrator (agency)). However, for a case as shown in Fig. 13, wherein APs are managed by different authentication servers 911 and 912 connected to an IP network 910, it is difficult for the same communication encryption/decryption key to be distributed to APs that are ranked lower than these servers. Especially, as use of wireless LANs has spread, it is predicted that individual administrators position their own APs, and that the number of environments wherein handovers are performed between APs managed by different managers will increase. For a handover between APs managed by different administrators, a problem exists in that, when the authentication servers 911 and 912 use the technique described in patent document 1 and attempt to exchange a communication encryption/decryption key, the authentication server 911 at one AP (the AP to which the MN 900 is connected before the handover) 901 can not identify the position of the authentication server 912 at the other AP (to which the MN 900 is to be connected after the handover) 902, so that the exchange of a communication encryption/decryption key is impossible.

Furthermore, according to the technique described in non-patent document 2, a rapid process for layer 3, such as an IP layer, or higher can be performed at the time of a handover. However, as for a process for layer 2 or lower, the authentication process (e.g., the series of processes shown in Fig. 11) in non-patent document 1 that is described above must be performed. That is, a problem exists in that the technique described in non-patent document 2 can not resolve a communication delay or disconnection that is the result of a process being performed for layer 2 or lower at the time of a handover.

### DISCLOSURE OF THE INVENTION

. While taking the above described problems into account, one objective of the present invention is to rapidly establish security between a mobile node and an access point when a handover for the mobile node is performed between access points linked to different access routers, so that the possibility a communication delay or disconnection will occur due to the handover is reduced.

To achieve the objective, according to the present invention, a communication handover method, whereby, in a communication system wherein a first access router, having a first access point at a lower rank, and a second access router, having a second access point at a lower rank, are connected via a communication network, a mobile node performs a handover from the first access point to the second access point, comprises:
a handover determination step of the mobile node, which is connected to the first access point and uses a communication encryption/decryption key in common with the first access point, and which is currently performing encrypted communication with the first access point using the communication encryption/decryption key, determining the performance of the handover from the first access point to the second access point, and obtaining, from the second access point, identification information for the second access point;
a first notification step of the mobile node transmitting to the first access router, via the first access point, a notification indicating the identification information for the second access point, identification information for the mobile node, and the communication encryption/decryption key related to encrypted communication with the first access point;
a second notification step of the first access router identifying the second access router based on the identification information, for the second access point, that is transmitted by the mobile node, and transmitting, to the second access router, a notification indicating the identification information for the mobile node and the communication encryption/decryption key related to encrypted communication with the first access point;
a third notification step of the second access router transmitting to the second access point a notification indicating the identification information for the mobile node and the communication encryption/decryption key related to encrypted communication with the first access point, all of which are transmitted by the first access router;
a comparison step of the second access point employing the identification information for the mobile node to identify the mobile node that is to be connected to the second access point as a result of the handover, and comparing, with the identification information for the mobile node that is transmitted by the second access router at the third notification step, the identification information for the mobile node that is to be connected to the second access point; and
a communication control step, based on the comparison results obtained at the comparison step, of the second access point employing the communication encryption/decryption key, used for encrypted communication between the mobile node and the first access point, and performing encrypted communication with the mobile node that has identification information that matches the identification information for the mobile node transmitted by the second access router, and permitting the mobile node to access the second access router.
As a result, when the mobile terminal (mobile node) performs a handover between access points (first and second access points) that are present and linked to different access routers (first and second access routers), security can be rapidly established between the mobile node and an access point (second access point) to which the mobile node is to be connected after the handover, so that the possibility of a communication delay or a disconnect due to the handover can be reduced.

The communication handover method of this invention further comprises:
an authentication successful communication step, when an authentication process for the mobile node is performed parallel to encrypted communication with the mobile node at the communication control step and when the mobile node is authenticated and a new communication encryption/decryption key is generated for encrypted communication between the mobile node and the second access point, of the second access point performing encrypted communication with the mobile node using the new communication encryption/decryption key and continuing a control process that allows the mobile node to access the second access router; and
an authentication failure communication step, when an authentication process for the mobile node is performed in parallel to encrypted communication with the mobile node at the communication control step and when the mobile node has not been authenticated, of the second access point performing a control process to inhibit access by the mobile node of the second access router.
Therefore, for a mobile node that is connected to an access point (second access point) as a result of the handover, temporary communication can be rapidly started by using the communication encryption/decryption key employed by the mobile node before the handover. Further, since the authentication process is performed in parallel, both authentication and access control for the mobile node can be performed.

Further, for the communication handover method of the invention, at the first notification step, the mobile node transmits, to the first access router, an RtSolPr message or an FBU message for FMIP, in which the identification information, for the mobile information and the communication encryption/decryption key related to encrypted communication with the first access point, are embedded.
Thus, FMIP messages, each carrying identification information for a mobile node and a communication encryption/decryption key related to encrypted communication with an access point (the first access point) to which the mobile node was connected before the handover, can be efficiently transferred from the mobile node to an access router (the first access router) to which the mobile node was connected before the handover.

Furthermore, for the communication handover method of the present invention, at the second notification step, the first access router transmits to the second access router an HI message of FMIP that includes the identification information for the mobile node and the communication encryption/decryption key related to encrypted communication with the first access point.
Thus, FMIP messages, each carrying identification information for a mobile node and a communication encryption/decryption key related to encrypted communication with an access point (the first access point), to which the mobile node was connected before the handover, can be efficiently transferred from an access router (the first access router), to which the mobile node was connected before the handover, to an access router (the second access router), to which the mobile node is to be connected after the handover.

Further, to achieve the objective, according to the present invention, a communication handover method, for a mobile node that performs a handover from a first access point to a second access point, in a communication system wherein a first access router, having the first access point at a lower rank, and a second access router, having the second access point at a lower rank, are connected via a communication network, comprises:
a handover determination step of, under a condition wherein a connection to the first access point is established, a communication encryption/decryption key is employed in common with the first access point and encrypted communication is currently performed with the first access point using the communication encryption/decryption key, determining the performance of the handover from the first access point to the second access point, and obtaining, from the second access point, identification information for the second access point;
a notification step of transmitting to the first access router, via the first access point, a notification indicating the identification information for the second access point, identification information for the mobile node, and the communication encryption/decryption key related to encrypted communication with the first access point;
a communication step of, when connection to the second access point is established by means of the handover, employing the communication encryption/decryption key related to encrypted communication with the first access point and performing encrypted communication with the second access point that has received, from the first access router via the second access router, the identification information for the mobile node and the communication encryption/decryption key related to encrypted communication with the first access point.
As a result, when the mobile terminal (mobile node) performs a handover between access points (first and second access points) that are present and linked to different access routers (first and second access routers), security can be rapidly established between the mobile node and an access point (second access point) to which the mobile node is to be connected after the handover, so that the possibility of a communication delay or a disconnect due to the handover can be reduced.

The communication handover method of this invention further comprises:
an authentication successful communication step, when an authentication process for the mobile node is performed parallel to encrypted communication with the mobile node at the communication step and when the mobile node is authenticated and anew communication encryption/decryption key is generated for encrypted communication with the second access point, of the mobile node performing encrypted communication with the second access point using the new communication encryption/decryption key and continuing a control process that allows the mobile node to access the second access router.
   Therefore, for a mobile node that is connected to a new access point (second access point) as a result of the handover, temporary communication can be rapidly started by using the communication encryption/decryption key employed by the mobile node before the handover. Further, since the authentication process is performed in parallel, both authentication and access control for the mobile node can be performed.

The communication handover method of this invention further comprises a step of:
generating a RtSolPr message or an FBU message for FMIP, in which the identification information for the mobile node and the communication encryption/decryption key related to encrypted communication with the first access point are embedded,
whereby, at the notification step, the RtSolPr message or the FBU message is transmitted to the first access router.
Thus, FMIP messages, each carrying identification information for a mobile node and a communication encryption/decryption key related to encrypted communication with an access point (the first access point) to which the mobile node was connected before the handover, can be efficiently transferred from the mobile node to an access router (the first access router) to which the mobile node was connected before the handover.

Additionally, to achieve the described above objective, according to the present invention, a communication message processing method for an access router, whereby in a communication system wherein a first access router having a first access point at a lower rank and a second access router having a second access point at a lower rank are connected via a communication network, a mobile node performs a handover from the first access point to the second access point, comprises:
a reception step of receiving, from the mobile node, identification information for the second access point, identification information for the mobile node, and a communication encryption/decryption key related to encrypted communication with the first access point;
a connection destination determination step of determining the second access router based on the identification information for the second access point; and
a notification step of transmitting to the second access router, as determined at the connection destination determination step, a notification indicating the identification information for the mobile node and the communication encryption/decryption key related to encrypted communication with the first access point.
As a result, when the mobile terminal (mobile node) performs a handover between access points (first and second access points) that are present and linked to different access routers (first and second access routers), security can be rapidly established between the mobile node and an access point (second access point) to which the mobile node is to be connected after the handover, so that the possibility of a communication delay or a disconnect due to the handover can be reduced.

Furthermore, according to the communication message processing method of this invention, at the reception step, a RtSolPr message or an FBU message for FMIP, in which the identification information for the mobile node and the communication encryption/decryption key related to encrypted communication with the first access point are embedded, is received from the mobile node.
Thus, FMIP messages, each carrying identification information for a mobile node and a communication encryption/decryption key related to encrypted communication with an access point (the first access point) to which the mobile node was connected before the handover, can be efficiently transferred from the mobile node to an access router (the first access router) to which the mobile node was connected before the handover.

The communication message processing method of this invention further comprises a step of:
generating an HI message for FMIP, in which the identification information for the mobile node and the communication encryption/decryption key related to encrypted communication with the first access point are embedded,
   whereby, at the notification step, the HI message is transmitted to the second access router.
Thus, FMIP messages, each carrying identification information for a mobile node and a communication encryption/decryption key related to encrypted communication with an access point (the first access point) to which the mobile node was connected before the handover, can be efficiently transferred from an access router (the first access router) to which the mobile node was connected before the handover to an access router (the second access router) to which the mobile node is to be connected after the handover.

Additionally, to achieve the described above objective, according to the present invention, a communication message processing method for a second access router, whereby in a communication system wherein a first access router having a first access point at a lower rank and the second access router having a second access point at a lower rank are connected via a communication network, a mobile node performs a handover from the first access point to the second access point, comprises:
a reception step of receiving, from the first access router, identification information for the mobile node and a communication encryption/decryption key related to encrypted communication with the first access point; and
a notification step of transmitting to the second access point, a notification indicating the identification information for the mobile node, received from the first access router and the communication encryption/decryption key related to encrypted communication with the first access point.
As a result, when the mobile terminal (mobile node) performs a handover between access points (first and second access points) that are present and linked to different access routers (first and second access routers), security can be rapidly established between the mobile node and an access point (second access point) to which the mobile node is to be connected after the handover, so that the possibility of a communication delay or a disconnect due to the handover can be reduced.

Furthermore, according to the communication message processing method of this invention, at the reception step, an HI message for FMIP, in which the identification information for the mobile node and the communication encryption/decryption key related to encrypted communication with the first access point are embedded, is received from the first access router.
Thus, FMIP messages, each carrying identification information for a mobile node and a communication encryption/decryption key related to encrypted communication with an access point (the first access point) to which the mobile node was connected before the handover, can be efficiently transferred from an access router (the first access router) to which the mobile node was connected before the handover to an access router (the second access router) to which the mobile node is to be connected after the handover.

Moreover, the communication message processing method of this invention further comprises a step of:
generating a notification message, in which the identification information for the mobile node and the communication encryption/decryption key related to encrypted communication with the first access point are embedded,
   whereby, at the notification step, the notification message is transmitted to the second access point.
Thus, since an access router (second access router), to which the mobile node is to be connected after the handover, transmits a notification message to an access point (second access point) to which the mobile node is to be connected after the handover, the identification information for the mobile node and the communication encryption/decryption key, which have been transmitted by the access router (first access router) to which the mobile node was connected before the handover, can be transferred to the second access point.

Also, to achieve the objective, according to the present invention, a communication control method for a second access point, whereby, in a communication system wherein a first access router, having a first access point at a lower rank, and a second access router, having the second access point at a lower rank, are connected via a communication network, a mobile node performs a handover from the first access point to the second access point, comprises:
a reception step of the second access router receiving, from the second access router, identification information for the mobile node and a communication encryption/decryption key related to encrypted communication with the first access point, which have been transmitted by the first access router;
a comparison step of employing the identification information for the mobile node to identify the mobile node that is to be connected to the second access point as a result of the handover, and comparing, with the identification information for the mobile node that is transmitted by the second access router at the reception step, the identification information for the mobile node that is to be connected to the second access point; and
a communication control step, based on the comparison results obtained at the comparison step, of employing the communication encryption/decryption key, used for encrypted communication between the mobile node and the first access point, and performing encrypted communication with the mobile node that has identification information that matches the identification information for the mobile node transmitted by the second access router, and permitting the mobile node to access the second access router.
Therefore, for a mobile node that is connected to an access point (second access point) as a result of the handover, temporary communication can be rapidly started by using the communication encryption/decryption key employed by the mobile node before the handover. Further, since the authentication process is performed in parallel, both authentication and access control for the mobile node can be performed.

Further, the communication control method of this invention further comprises:
an authentication successful communication step, when an authentication process for the mobile node is performed parallel to encrypted communication with the mobile node at the communication control step and when the mobile node is authenticated and a new communication encryption/decryption key is generated for encrypted communication between the mobile node and the second access point, of performing encrypted communication with the mobile node using the new communication encryption/decryption key and continuing a control process that allows the mobile node to access the second access router; and
an authentication failure communication step, when an authentication process for the mobile node is performed in parallel to encrypted communication with the mobile node at the communication control step and when the mobile node has not been authenticated, of performing a control process to inhibit access by the mobile node of the second access router.
Therefore, for a mobile node that is connected to an access point (second access point) as a result of the handover, temporary communication can be rapidly started by using the communication encryption/decryption key employed by the mobile node before the handover. Further, since the authentication process is performed in parallel, both authentication and access control for the mobile node can be performed.

The communication handover method, the communication message processing method and the communication control method of the present invention have the above described arrangements, and provide effects such that, when a mobile node performs a handover between access points that are present on the links of different access routers, security can be rapidly established between the mobile node and an access point, and the possibility of a communication delay or disconnection due to the handover can be reduced.

### BRIEF DESCRIPTION OF THE DRAWINGS

[Fig. 1] A diagram showing an example network configuration according to one mode of the present invention.
[Fig. 2] A diagram showing an example arrangement for an MN according to the mode of the present invention.
[Fig. 3] A diagram showing an example arrangement for a pAR according to the mode of the present invention.
[Fig. 4] A diagram showing an example arrangement for an nAR according to the mode of the present invention.
[Fig. 5] A diagram showing an example arrangement for an AP present at a lower rank of an nAR according to the mode of the present invention.
[Fig. 6] A sequence chart showing an example operation according to the mode of the present invention.
[Fig. 7A] A diagram showing an example message, used for the mode of the present invention, that is related to a notification from an MN to a pAR indicating an MAC address and a communication encryption/decryption key, i.e., showing an FBU message in which an MAC address and a communication encryption/decryption key are embedded.
[Fig. 7B] A diagram showing an example message, used for the mode of the present invention, that is related to a notification from an MN to a pAR indicating an MAC address and a communication encryption/decryption key, i.e., showing an RtSolPr message in which an MAC address and a communication encryption/decryption key are embedded.
[Fig. 7C] A diagram showing an example message, used for the mode of the present invention, that is related to a notification from an MN to a pAR indicating an MAC address and a communication encryption/decryption key, i.e., showing an MAC address/key notification message in which an MAC address and a communication encryption/decryption key are embedded.
[Fig. 8A] A diagram showing an example message, used for the mode of the present invention, that is related to a notification from a pAR to an nAR indicating an MAC address and a communication encryption/decryption key, i.e., showing an HI message in which an MAC address and a communication encryption/decryption key are embedded.
[Fig. 8B] A diagram showing an example message, used for the mode of the present invention, that is related to a notification from a pAR to an nAR indicating an MAC address and a communication encryption/decryption key, i.e., showing an MAC address/key notification message in which an MAC address and a communication encryption/decryption key are embedded.
[Fig. 9A] A schematic diagram showing the authentication processing for the mode of this invention, performed for an MN that is so set that usage of a communication encryption/decryption key that was used before a handover is available after the handover, and showing the state in which an AP allows an MN to employ a communication encryption/decryption key that was used before the handover.
[Fig. 9B] A schematic diagram showing the authentication processing for the mode of this invention, performed for an MN that is so set that usage of a communication encryption/decryption key that was used before a handover is available after the handover, and showing the state in which an AP has performed the authentication process for the MN that performed the handover, and the MN is authenticated.
[Fig. 9C] A schematic diagram showing the authentication processing for the mode of this invention, performed for an MN that is so set that usage of a. communication encryption/decryption key that was used before a handover is available after the handover, and showing the state in which an AP has performed the authentication process for the MN that performed the handover, and the MN is not authenticated.
[Fig. 10] A diagram showing the overview of port access control performed by IEEE 802.1x according to related art.
[Fig. 11] A sequence chart showing an example operation for the arrangement in Fig. 10 performed when a supplicant system obtains a predetermined service through an authenticator system.
[Fig. 12] A diagram showing an example network configuration according to related art.
[Fig. 13] A diagram showing an example network configuration for explaining problems to be resolved by the present invention.

### BEST MODE FOR CARRYING OUT THE INVENTION

One mode of the present invention will now be described while referring to drawings. The basic overview of this invention is that: before performing a handover between APs 21 and 31, which are located lower than different access routers (pAR 20 and nAR 30) connected to an IP network 50, an MN 10 transmits identification information (e.g., an MAC address) for the MN 10 and a communication encryption/decryption key used for communication with the AP 21 before the handover; the MAC address of the MN 10 and the communication encryption/decryption key are supplied to the nAR 30, which is located higher than the AP 31 that is newly connected after the handover; and further, the MAC address for the MN 10 and the communication encryption/decryption key are supplied by the nAR 30 to the AP 31; and thus, without a series of operations (e.g., the operation in the sequence chart in Fig. 11) related to the acquisition of security being performed with the AP 31, the MN 10 can rapidly recover to the communication state before the handover, by using the communication encryption/decryption key that was used before the handover.

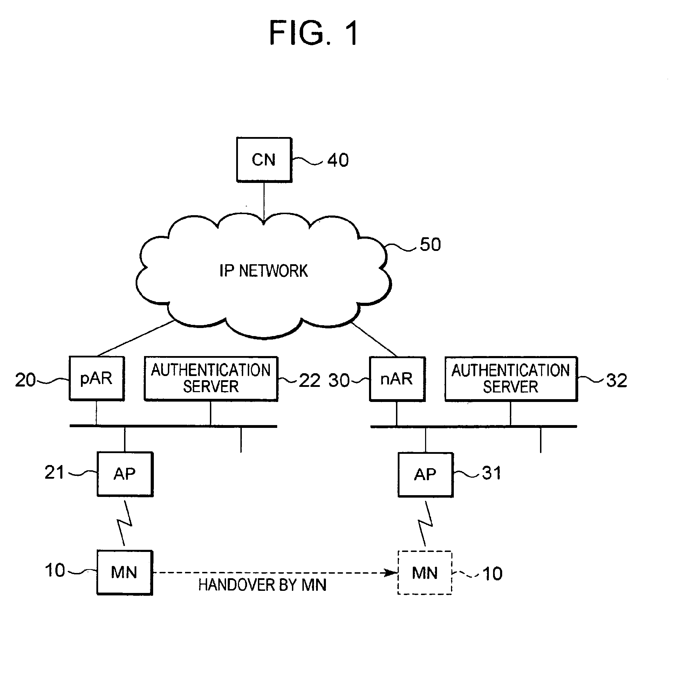

Fig. 1 is a diagram showing an example network configuration according to the mode of the present invention. In Fig. 1, are illustrated an MN 10; a pAR 20; an AP 21, at a lower rank than the pAR 20; an authentication server 22, on the link of the pAR 20; an nAR 30; an AP 31, at a lower rank than the nAR 30; an authentication server 32, on the link of the nAR 30; a CN (Correspondent Node) 40; and an IP network 50. It should be noted that while only one CN 40 is shown in Fig. 1, the MN 10 can perform communication with a plurality of CNs 40 through the IP network 50, and a plurality of CNs 40 may be present.

The pAR 20 and the nAR 30 are access routers connected to the IP network 50, and individually form sub-nets. When the MN 10 is present inside the communication cell of the AP 21, at a lower rank than the pAR 20, the MN 10 can access the IP network 50 via the AP 21 and the pAR 20. When the MN 10 is present inside the communication cell of the AP 31, at a lower rank than the nAR 30, the MN 10 can access the IP network 50 via the AP 31 and the nAR 30. Further, the authentication server 22 or 32 is a server for authenticating the MN 10 that is connected either to the AP 21 or 31, and is, for example, a RADIUS server. Although not shown, the authentication servers 22 and 32 can hold or refer to a user account database, in which qualification information for authentication, property information for each user, etc., are stored. It is preferable that a relationship of trust be established in advance between the pAR 20 and the nAR 30 (or an arbitrary node present on the link of the pAR 20 and an arbitrary node present on the link of the nAR 30) so as to transmit a communication encryption/decryption key.

Further, the MN 10, the APs 21 and 31 and the authentication servers 22 and 32 include entities, such as IEEE 802.1x and the EAP, for performing mutual authentication between the MN 10 and the APs 21 and 31, and enabling encrypted communication between the MN 10 and the APs 21 and 31.

Additionally, the IP network 50 is, for example, a WAN (Wide Area Network), using IP communication via the Internet, etc. The pAR 20 and the nAR 30 described above can be connected to the IP network 50. Further, in Fig. 1, the CN 40 is shown that can be connected to the IP network 50 and is communicating with the MN 10.

Here, as the initial state, assume that the MN 10 is connected to the AP 21, and is currently communicating with the CN 40 via the pAR 20. And assume that, by performing a handover from the AP 21 to the AP 31, the MN 10 is to newly communicate with the CN 40 via the nAR 30, after the handover.

The mode of the present invention will now be described. For this mode, an explanation will be given for a method whereby, by employing the technique described in non-patent document 2, the MN 10 transmits, to the nAR 30, a notification indicating an MAC address and a communication encryption/decryption key (hereinafter also called simply a key), and when the nAR 30 provides this information for the AP 31, communication after the handover is rapidly started.

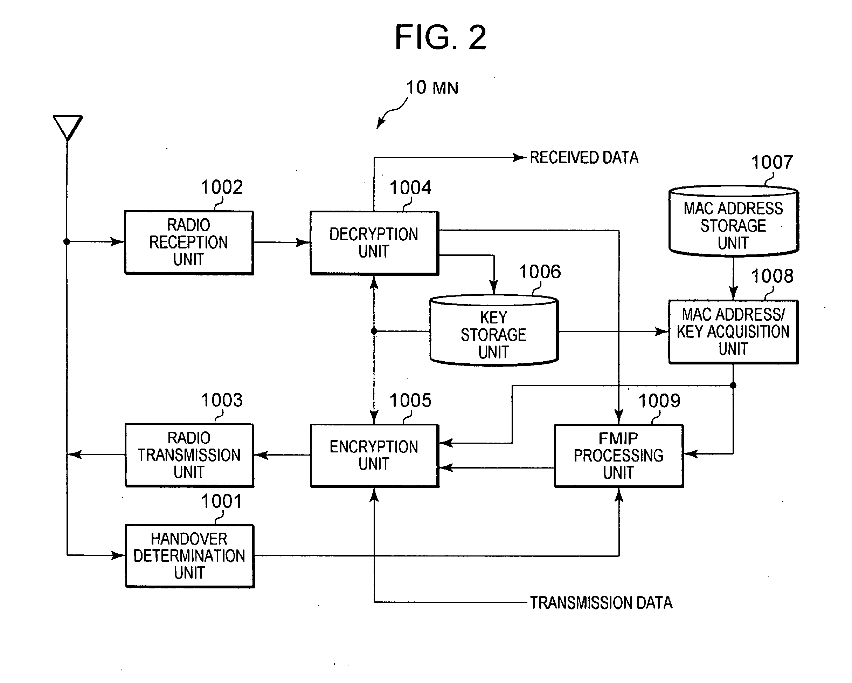

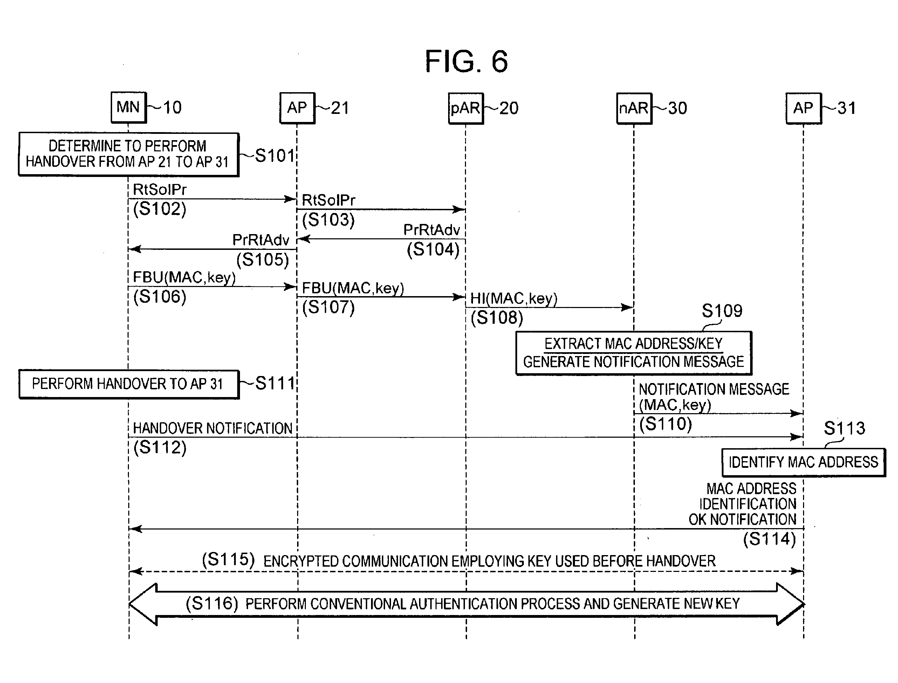

The arrangements for the MN 10, the pAR 20, the nAR 30 and the AP 31 for the mode of this invention will now be described. It should be noted that an MN 10, a pAR 20, an nAR 30 and an AP 31 shown in Figs. 2 to 5 are detailed arrangements for the MN 10, the pAR 20, the nAR 30 and the AP 31 shown in Fig. 1. Further, in Figs. 2 to 5, the individual functions are shown using blocks, and can be obtained by using hardware and/or software. Especially, the main processes of this invention (e.g., processes at the individual steps shown in Fig. 6, which will be described later) can be executed by a computer program.

Fig. 2 is a diagram showing an example arrangement for an MN according to the mode of the present invention. The MN 10 shown in Fig. 2 includes a handover determination unit 1001, a radio reception unit 1002, a radio transmission unit 1003, a decryption unit 1004, an encryption unit 1005, a key storage unit 1006, an MAC address storage unit 1007, an MAC address/key acquisition unit 1008 and an FMIP processing unit 1009.

The handover determination unit 1001 is a processor that determines the start of a handover under an arbitrary condition, e.g., compares radio field intensities for a plurality of different APs, and performs the L2 handover to the AP having the highest radio field intensity (changes the connection to a communication destination AP).

Further, the radio reception unit 1002 and the radio transmission unit 1003 are processors that respectively perform data reception and data transmission via radio communication, and include various functions required for performing radio communication.

The decryption unit 1004 and the encryption unit 1005 are processors that respectively employ a communication encryption/decryption key stored in the key storage unit 1006 to decrypt data received by the radio reception unit 1002, and to encrypt data to be transmitted by the radio transmission unit 1003. It should be noted that encrypted communication using the decryption unit 1004 and the encryption unit 1005 is performed in order to improve security along radio transmission paths between the MN 10 and the APs 21 and 31.

Furthermore, the key storage unit 1006 is a processor for storing a key that is used for encrypted communication between the APs 21 and 31 (encrypted communication using the decryption unit 1004 and the encryption unit 1005) in order to reinforce security. It should be noted that conventionally, when the MN 10 is connected to the AP 21 or 31, this communication encryption/decryption key is to be generated through the authentication process, and is to be periodically updated for the reinforcement of security.

Additionally, the MAC address storage unit 1007 represents a nonvolatile memory, etc., in which MAC addresses by which network apparatuses can be uniquely identified are stored. Further, the MAC address/key acquisition unit 1008 is a processor for reading an MAC address stored in the MAC address storage unit 1007 and a communication encryption/decryption key stored in the key storage unit 1006. It should be noted that in this invention an MAC address and a communication encryption/decryption key are read in consonance with the processing related to the FMIP. Further, an MAC address and the communication encryption/decryption key, which are obtained by the MAC address/key acquisition unit 1008, are to be supplied to the FMIP processing unit 1009, and are either to be transmitted to the pAR 20, with a transmission message associated with the FMIP, or to be transmitted to the pAR 20, as an inherent MAC address/key notification message, in accordance with a transmission timing for a transmission message associated with the FMIP, or a reception timing for a reception message.

Moreover, the FMIP processing unit 1009 is a processor that, in response to a determination by the handover determination unit 1001 to initiate a handover, performs a process related to the FMIP, such as the generation of a transmission message associated with the FMIP (e.g., an RtSolPr (Router Solicitation for a Proxy or Router Solicitation for Proxy Advertisement) message or an FBU (Fast Binding Update) message), or handling of a reception message associated with the FMIP (e.g., a PrRtAdv (Proxy Router Advertisement) message or an FBAck (Fast Binding Acknowledge) message). It should be noted that the presence of the FMIP processing unit 1009 indicates that the MN 10 mounts the FMIP.

As described above, the MN 10 is so designed that the MN 10 can transmit, to the pAR 20, a transmission message related to the FMIP, in which the MAC address of the MN 10 and the communication encryption/decryption key are embedded, or in accordance with a transmission timing for a transmission message related to the FMIP or a reception timing for a reception message, the MN 10 can transmit an address/key notification message that includes the MAC address of the MN 10 and the communication encryption/decryption key.

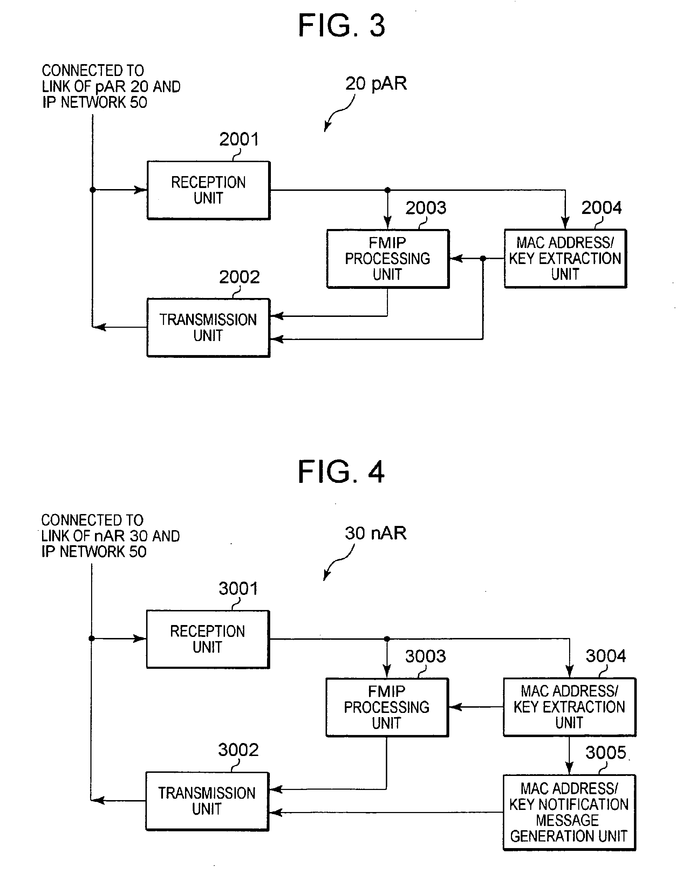

Furthermore, Fig. 3 is a diagram showing an example configuration of a pAR according to the mode of the present invention. The pAR 20 in Fig. 3 includes a reception unit 2001, a transmission unit 2002, an FMIP processing unit 2003 and an MAC address/key extraction unit 2004. While the pAR 20 also includes a transfer unit for transferring a received packet, this is not shown. The reception unit 2001 and the transmission unit 2002 are processors that are connected to the link of the pAR 20, to which the AP 21 is also connected, or to the IP network 50, to respectively perform data reception and data transmission.

Further, the FMIP processing unit 2003 is a processor for performing processes related to the FMIP, such as a search for an access router (nAR 30), which is a connection destination, to which the MN 10 is to be connected by the next handover, acquisition of the network prefix for a sub-net that the nAR 30 forms, generation of a transmission message related to the FMIP (e.g., an HI (Handover Initiate) message or an FBAck message) and the handling of a reception message related to the FMIP (e.g., an FBU message or an HAck (Handover Acknowledge) message). It should be noted that the presence of the FMIP processing unit 2003 indicates that the pAR 20 mounts the FMIP.

_ Further, the MAC address/key extraction unit 2004 is a processor for extracting the MAC address of the MN 10 and the communication encryption/decryption key that are embedded in a reception message, related to the FMIP, that is received from the MN 10, or for extracting the MAC address of the MN 10 and the communication encryption/decryption key from an inherent address/key notification message that is received from the MN 10. Additionally, the MAC address of the MN 10 and the communication encryption/decryption key, which have been extracted by the MAC address/key extraction unit 2004, are to be supplied to the FMIP processing unit 2003, and are either to be transmitted to the nAR 30, with a transmission message related to the FMIP, or to be transmitted as an inherent address/key notification message to the nAR 30, in accordance with the transmission timing for a transmission message related to the FMIP or a reception timing for a reception message.

As described above, the pAR 20 is so designed that when a notification designating the MAC address of the MN 10 and the communication encryption/decryption key is received from the MN 10, the pAR 20 can transmit to the nAR 30 a transmission message related to the FMIP, in which the MAC address of the MN 10 and the communication encryption/decryption key are embedded, or in accordance with the transmission timing for a transmission message related to the FMIP, or the reception timing for a reception message, the pAR 20 can transmit to the nAR 30 an address/key notification message that includes the MAC address of the MN 10 and the communication encryption/decryption key.

Also, Fig. 4 is a diagram showing an example arrangement for an nAR according to the mode of this invention. The nAR 30 in Fig. 4 includes a reception unit 3001, a transmission unit 3002, an FMIP processing unit 3003, an MAC/address key extraction unit 3004 and an MAC address/key notification message generation unit 3005. While the nAR 30 also includes a transfer unit for transferring a received packet, this is not shown. The reception unit 3001 and the transmission unit 3002 are processors that are connected to the link of the nAR 30, to which the AP 31 is also connected, or to the IP network 50, to respectively perform data reception and data transmission.

Further, the FMIP processing unit 3003 is a processor for performing processes related to the FMIP, such as the verification of the IP address of the MN 10 received from the pAR 20, the generation of a transmission message related to the FMIP (e.g., an HAck message) and the handling of a reception message related to the FMIP (e.g., an HI message or an FNA (Fast Neighbor Advertisement) message). It should be noted that the presence of the FMIP processing unit 3003 indicates that the nAR 30 mounts the FMIP.

Furthermore, the MAC address/key extraction unit 3004 is a processor for extracting the MAC address of the MN 10 and the communication encryption/decryption key, which are embedded in a message related to the FMIP that is received from the pAR 20, or for extracting the MAC address of the MN 10 and the communication encryption/decryption key from an inherent address/key notification message that is received from the pAR 20. Additionally, the MAC address of the MN 10 and the communication encryption/decryption key, which have been extracted by the MAC address/key extraction unit 3004, are to be supplied to the MAC address/key notification message generation unit 3005.

In sequential order, the MAC address/key notification message generation unit 3005 is a processor for generating a notification message that includes the MAC address of the MN 10 and the communication encryption/decryption key, which have been extracted by the MAC address/key extraction unit 3004. And a notification message, generated by the MAC address/key notification message generation unit 3005, is transmitted via the transmission unit 3002 to the AP 31, located at a lower level.

As described above, the nAR 30 is so designated that when a notification designating the MAC address of the MN 10 and the communication encryption/decryption key is received from the pAR 20, the nAR 30 can transmit, to the AP 31 at the lower rank, a notification designating the MAC address of the MN 10 and the communication encryption/decryption key.

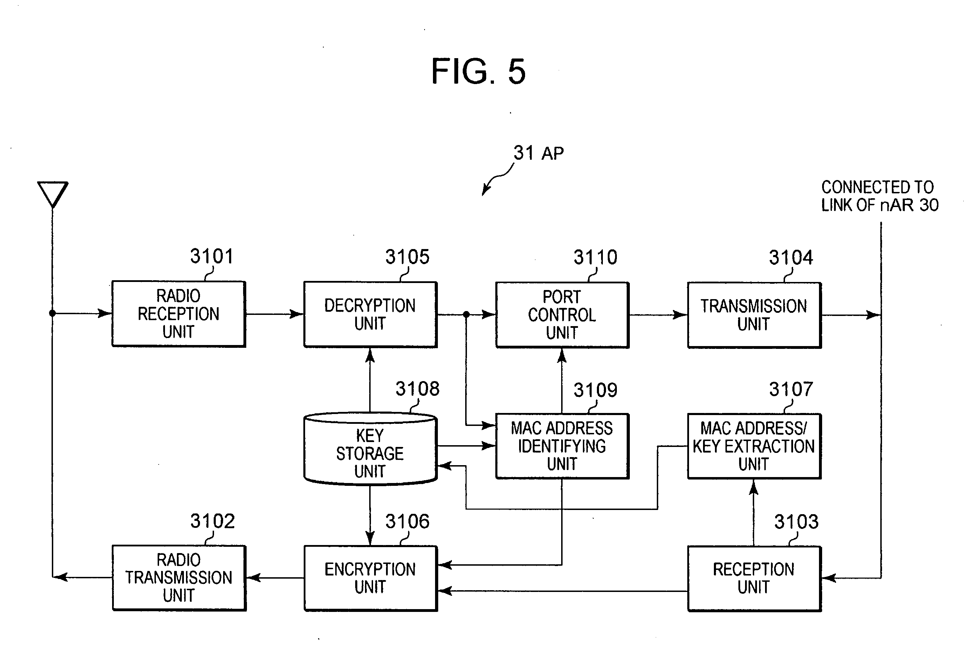

Furthermore, Fig. 5 is a diagram showing an example arrangement of an AP, at a lower rank than the nAR, according to the mode of this invention. The AP 31 in Fig. 5 includes a radio reception unit 3101, a radio transmission unit 3102, a reception unit 3103, a transmission unit 3104, a decryption unit 3105, an encryption unit 3106, an MAC address/key extraction unit 3107, a key storage unit 3108, an MAC address identification unit 3109 and a port control unit 3110.

The radio reception unit 3101 and the radio transmission unit 3102 are processors that respectively perform data reception and data transmission via radio communication, and include various functions required for radio communication. It should be noted that the radio reception unit 3101 and radio transmission unit 3102 form a communication cell that is a radio transmission/reception range for radio communication, and enable communication with the MN 10 that is present in this communication cell. Further, the reception unit 3103 and the transmission unit 3104 are processors that are connected to the link of the nAR 30 to perform data reception and data transmission.

Further, the decryption unit 3105 and the encryption unit 3106 are processors that employ a communication encryption/decryption key stored in the key storage unit 3108 to respectively decrypt data received by the radio reception unit 3101 and to encrypt data to be transmitted by the radio transmission unit 3102. It should be noted that data decrypted by the decryption unit 3105 are transmitted by the port control unit 3110, via a control port or a controlled port, to the nAR 30 and the authentication server 32. Furthermore, data encrypted by the encryption unit 3106 are transmitted to the MN 10 along a radio transmission path.

Additionally, the MAC address/key extraction unit 3107 is a processor for performing a process related to a notification message, received from the nAR 30, that includes the MAC address of the MN 10 and the communication encryption/decryption key. The MAC address/key extraction unit 3107 extracts the MAC address of the MN 10 and the communication encryption/decryption key from a notification message received from the nAR 30, and supplies them to the key storage unit 3108.

Moreover, the key storage unit 3108 is a key that is used for encrypted communication with the MN 10 (encrypted communication using the decryption unit 3105 and the encryption unit 3106) in order to reinforce security. In this invention, it should be noted that, not only a communication encryption/decryption key, generated through the normal authentication process, but also a communication encryption/decryption key, included in a notification message received from the nAR 30, is stored in the key storage unit 3108.

Also, the MAC address identification unit 3109 is a processor for determining that the MAC address designated by the MN 10, or the MAC address described as a transmission source for data received from the MN 10 via the radio reception unit 3101, matches the MN 10 MAC address that is stored in the key storage unit 3108. Further, the port control unit 3110 is a processor for controlling the allowance and usage of, for example, a control port shown in Fig. 10. That is, in this arrangement, prepared by the MAC address identification unit 3109 and the port control unit 3110, the MN 10 that has an MAC address stored in the key storage unit 3108 is regarded as an MN 10 that has been verified through the authentication process and that can use the control port.

As described above, the AP 31 is so designed that when a notification designating the MAC address of the MN 10 and the communication encryption/decryption key is received from the nAR 30, the AP 31 performs port control based on this information.

The operation according to the mode of this invention will now be described. Here, an explanation will be given for an operation for which are employed, as components in the network composition of Fig. 1, the MN 10, the pAR 20, the nAR 30 and the AP 31 shown in Figs. 2 to 5, referring to Fig. 6. It should be noted that the same arrangement as the AP 31 in Fig. 5 may be provided for the.AP 21, or a conventional AP may be employed. Fig. 6 is a sequence chart showing an example operation for the mode of the present invention.

For example, in a case wherein the MN 10 has begun moving from the area of the pAR 20 (the communication cell range of the AP 21) to the area of the nAR 30 (the communication cell range of the AP 31), the movement is detected by layer 2, and based on this as a starting point, the initiation of a handover to layer 3 is determined to be logical (step S101). The initiation of a handover is determined, for example, by comparing the radio field reception intensity for the AP 21 with the radio field reception intensity for the AP 31.

Based, for example, on a beacon received from the AP 31 at a moving location, the MN 10 obtains from the AP 31 information that includes an AP-ID (identification information for each AP), and transmits, to the currently connected pAR 20, an RtSolPr message that includes the AP-ID of the AP 31 (step S102). The RtSolPr message transmitted by the MN 10 is transferred by the AP 21 and received by the pAR 20 (step S103). Upon receiving this RtSolPr message, the pAR 20 employs the AP-ID of the AP 31 notified by the MN 10, and either searches for a neighboring access router to obtain information about the nAR 30, or obtains for the nAR 30 information that has previously been obtained as a result of a search (information held by the pAR 20).

And as a response to the RtSolPr message, the pAR 20 transmits to the MN 10 a PrRtAdv message that includes information about the nAR 30 (e.g., information, such as the network prefix of a sub-net formed by the nAR 30) (step S104). The PrRtAdv message transmitted by the pAR 20 is transferred by the AP 21 and received by the MN 10 (step S105). Upon receiving the PrRtAdv message, the MN 10 employs the network prefix of a sub-net formed by the nAR 30, which is included in the PrRtAdv message, and the link layer address of the MN 10, and generates an NCoA (New Care of Address), which is an address that can conform to the sub-net formed by the nAR 30. It should be noted that the above described operation is the same as that defined by the FMIP.

At this time, the MAC address/key acquisition unit 1008 of the MN 10 obtains the MAC address of the MN 10 and a communication encryption/decryption key used for communication with the AP 21, and transmits these data to the FMIP processing unit 1009. The FMIP processing unit 1009 of the MN 10 generates an FBU (Fast Binding Update) message in which, in addition to the generated NCoA, the MAC address and the communication encryption/decryption key are embedded. And the MN 10 forwards, to the pAR 20, the FBU message (written as FBU (an MAC, key) in Fig. 6) in which the MAC address and the communication encryption/decryption key have been embedded (step S106). The FBU message, transmitted by the MN 10, in which the MAC address and the communication encryption/decryption key have been embedded, is transferred by the AP 21 and received by the pAR 20 (step S107).

When the pAR 20 receives the FBU message in which the MAC address and the communication encryption/decryption key have been embedded, the MAC address/key extraction unit 2004 extracts the MAC address and the communication encryption/decryption key from the FBU message and transmits the thus extracted MAC address and communication encryption/decryption key to the FMIP processing unit 2003. The FMIP processing unit 2003 generates an HI message in order to ascertain whether the NCoA generated by the MN 10 is an address that can be used for the sub-net of the nAR 30, and at this time, embeds in the HI message the MAC address and the communication encryption/decryption key received from the MN 10. Further, the pAR 20 transmits to the nAR 30 the HI message (written as HI(MAC, key) in Fig. 6) in which the MAC address and the communication encryption/decryption key have been embedded (step S108). It should be noted that the HI message forwarded from the pAR 20 to the nAR 30, in which the MAC address and the communication encryption/decryption key have been embedded, arrives at the nAR 30 via multiple relay nodes (not shown) that constitute the IP network 50.

When the nAR 30 receives the HI message in which the MAC address and the communication encryption/decryption key have been embedded, the MAC address/key extraction unit 3004 extracts the MAC address and the communication encryption/decryption key from the HI message, and transmits to the MAC address/key notification message generation unit 3005 the MAC address and the communication encryption/decryption key that have been extracted. The MAC address/key notification message generation unit 3005 generates an address/key notification message (written as a notification message(MAC, key) in Fig. 6) that includes the MAC address and the communication encryption/decryption key (step S109). Also, the nAR 30 transmits this notification message to the AP 31 (step S110). As a result, the AP 31 can obtain the MAC address of an MN 10 that will effect an access, as a result of a handover, and a communication encryption/decryption key that the pertinent MN 10 used with the AP 21 before the handover.

Incidentally, the nAR 30 examines the validity of the NCoA, which is included in the HI message in which the MAC address and the communication encryption/decryption key had been embedded, and when the NCoA is valid, a process (the normal process related to the FMIP) for transmitting to the pAR 20 an HAck message designating the status indicated by the results, a process for the transmission of an FBAck message by the pAR 20, and a process for the transfer of a packet from the pAR 20 to the nAR 30, etc., are performed. However, no explanation for them will be given.

On the other hand, after the MN 10 has transmitted the FBU message in which the MAC address and the communication encryption/decryption key have been embedded, the handover process for switching from the AP 21, at a lower rank than the pAR 20, to the AP 31, at a lower rank than the nAR 30 (step S111). Then, the MN 10 transmits a handover notification to the AP 31 in order to issue a connection request (step S112). It should be noted that with the handover notification the MN 10 transmits the MAC address to the AP 31.

Upon receiving the handover notification, the AP 31 detects that the MN 10 has attempted a connection to the AP 31. The MAC address identification unit 3109 examines the MAC addresses, designated by the nAR 30 using notification messages, to determine whether there is an MAC address that matches the MAC address indicated by the MN 10 using the handover notification (step S113). When the MAC address identification unit 3109 determines that there is a matched MAC address, the MAC address identification unit 3109 generates information indicating that the MAC address has been identified and transmits the information to the MN 10 (step S114). Upon receiving this notification, the MN 10 initiates encrypted communication with the AP 31 using the communication encryption/decryption key that was used with the AP 21 before the handover (step S115). It should be noted that the AP 31 can employ the communication encryption/decryption key for the MN 10 that is received from the nAR 30 and decrypt a packet received from the MN 10. Further, in a case wherein a matched MAC address is identified at step S113, the AP 31 sets the MN 10 to the control port enabled state, and performs port control, so that the MN 10 can obtain, for example, a predetermined service, such as an Internet access service, via the control port.

Also, such a case is assumed wherein, since the handover timing for the MN 10 is too early, when the MN 10 transmits the handover notification, the AP 31 does not yet receive, from the nAR 30, a notification message, which includes the MAC address of the MN 10 and the communication encryption/decryption key. In this case, the AP 31 starts a conventional authentication process at step S116, and as soon as the AP 31 obtains, from the nAR 30, the MAC address of the MN 10 and a communication encryption/decryption key, permits the use of the communication encryption/decryption key employed before the handover. In this manner, following the handover, the MN 10 can quickly begin communicating using the communication encryption/decryption key employed before the handover.

Through the described above operation, the AP 31, to which the MN 10 is to be connected after the handover, can obtain the MAC address of the MN 10 and the communication encryption/decryption key that the MN 10 used with the AP 21 before the handover. Therefore, after the MN 10 has been switched to the AP 31 by a handover, the MN 10 is not required to perform the authentication process related to the generation of a new communication encryption/decryption key, and employing the communication encryption/decryption key used before the handover, can continuously perform communication.

. Furthermore, the communication encryption/decryption key used by the MN 10 before the handover is a key that was distributed by completion of a specific authentication process before the handover. Therefore, this is information indicating that the MN 10 was certified for communication with the AP 21 to which connected before the handover. Thus it is appropriate, even after the handover, that the MN 10 be authorized to use the communication encryption/decryption key that was used before the handover.

It should be noted, however, that security would be deteriorated were a communication encryption/decryption key that was used before a handover to be used continuously after a handover. Therefore, it is preferable that of all the purposes for which a communication encryption/decryption key could be used before a handover, permission to use such a key after a handover should be limited to the prevention of a communication delay or of a disconnection. It is further preferable that a communication encryption/decryption key employed before a handover be used only as temporary means for providing continuous service, and be replaced in as short a period as possible with a new communication encryption/decryption key generated through the performance of an appropriate authentication process (replacement of a communication encryption/decryption key used before a handover by a newly generated communication encryption/decryption key).

For example, when a matched MAC address is identified at step S113, the AP 31 sets the pertinent MN 10 in a control port enabled state, so that after the handover, the MN 10 is permitted to use the communication encryption/decryption key used before the handover. Also, the AP 31 performs, in parallel, a conventional authentication process and generation of a new communication encryption/decryption key (e.g., the processes at steps S1101 to S1111 of the sequence chart in Fig. 11) (step S116).

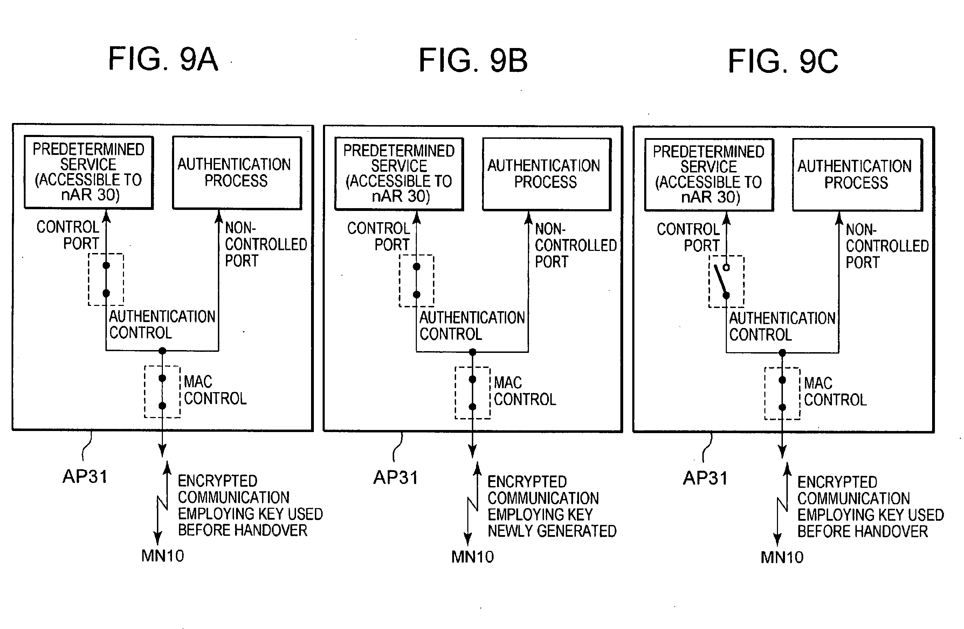

Fig. 9 is a diagram typically showing, for the mode of this invention, the authentication process performed for an MN that is set up to use, after a handover, a communication encryption/decryption key that was used before the handover. Fig. 9A is a diagram typically showing the state wherein an AP permits an MN to use a communication encryption/decryption key used before a handover. Fig. 9B is a diagram typically showing the state wherein, as a result of an AP performing an authentication process for an MN after a handover, the MN is authenticated. Fig. 9C is a diagram typically showing the state wherein, as a result of an AP performing the authentication process for an MN after the handover, the MN is not authenticated. It should be noted that in Figs. 9A to C, the port control states of the AP 31 are typically shown.

After the AP 31 has acknowledged the MAC address of the MN 10 at step S113, as shown in Fig. 9A, the AP 31 enters the state wherein MN 10 is enabled to perform encrypted communication using the communication encryption/decryption key used before the handover, and wherein the port control unit 3110 manages a control port in order to provide for the MN 10 a predetermined service, such as a service related to a connection to an external IP network 50, like the Internet (a connection to the nAR 30). Therefore, the MN 10 can employ the communication encryption/decryption key used before the handover, and can quickly, and temporarily, perform again the communication that was being performed before the handover.

On the other hand, under the temporary condition shown in Fig. 9A, the AP 31 performs a conventional authentication process for the MN 10 at step S116. When the MN 10 is authenticated as a result of the authentication process, the AP 31 distributes to the MN 10 a new communication encryption/decryption key that is to be employed by the MN 10. And as shown in Fig. 9B, the AP 31 enters a state wherein encrypted communication is enabled using the new communication encryption/decryption key, and wherein the port control unit 3110 continues management of the control port in order to provide a predetermined service for the MN 10.

Further, when the MN 10 is not authenticated as a result of the authentication process, as shown in Fig. 9C, the AP 31 enters a state wherein a new communication encryption/decryption key is not distributed to the MN 10, and wherein the port control unit 3110 manages the control port so as not to provide a predetermined service for the MN 10 (so that the MN 10 can not utilize a predetermined service).

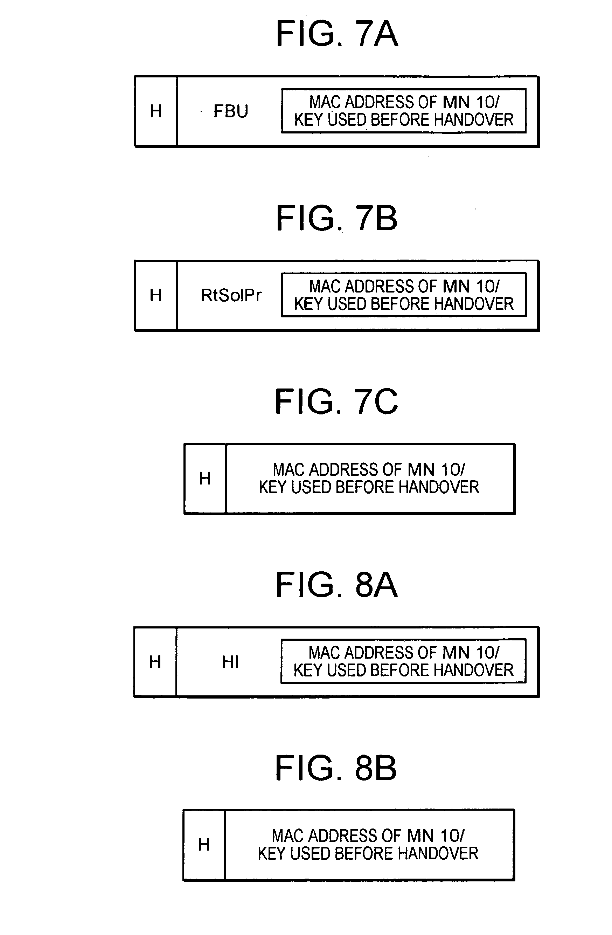

Furthermore, in the mode described above, an explanation has been given for a case wherein the MN 10 embeds the MAC address and the communication encryption/decryption key in the FBU message. However, they can also be embedded in an RtSolPr message, or in an independent MAC address/key notification message that is not related to an FMIP associated message. Especially, since a case wherein because of the timing at which the MN 10 performs a handover it is too early to transmit the FBU message before the handover, it is also assumed it is effective in this case for the MAC address and the communication encryption/decryption key to be embedded in an RtSolPr message. In Figs. 7A to C, three examples described above are shown, and concern a message that is transmitted by the MN 10 to the pAR 20 and are related to the notification of the MAC address and the communication encryption/decryption key. Likewise, an explanation has been given for a case wherein the pAR 20 embeds the MAC address and the communication encryption/decryption key in an HI message. However, they can also be embedded in an independent MAC address/key notification message that is not related to an FMIP associated message. In Figs. 8A and B, two examples described above are shown, and concern a message that is transmitted by the pAR 20 to the nAR 30 and is related to the MAC address and the communication encryption/decryption key.

As described above, according to the arrangement of the mode of this invention, before performing a handover between the APs 21 and 31 that are present at lower ranks of different access routers (pAR 20 and nAR 30) connected to the IP network 50, the MN 10 transmits the MAC address of the MN 10 and a communication encryption/decryption key used for communication with the AP 21 before the handover; the MAC address of the MN 10 and the communication encryption/decryption key are supplied to the nAR 30, which is higher than the AP 31 that is newly connected after the handover; and further, the MAC address for the MN 10 and the communication encryption/decryption key are supplied by the nAR 30 to the AP 31. Thus, without performing a series of operations (e.g., the operation in the sequence chart in Fig. 11) related to the acquisition of security, the MN 10 and the AP 31, and the AP 31 and the authentication server 32 can quickly recover the communication condition existing before the handover by using the communication encryption/decryption key that was used before the handover.

It should be noted that the individual functional blocks employed for the explanation of the mode of the present invention are obtained typically as LSI (Large Scale Integration) integrated circuits. These may be formed as individual chips, or may be formed as a single chip so as to cover part or all of them. It should be noted that an LSI is employed here, but depending on differences in the integration density, this may also be called an IC (Integrated Circuit), a system LSI, a super LSI or an ultra LSI.

Additionally, the integrated circuit formation method is not limited to the LSI, but is also applicable to a dedicated circuit or a general-purpose processor that may be employed. An FPGA (Field Programmable Gate Array) that is programmable after an LSI is produced, or a reconfigurable processor, for which the connection and the setup of a circuit cell inside an LSI is reconfigurable, may also be employed.

Moreover, when an integrated circuit technology that is employed in an LSI has appeared as a result of the development of semiconductor technology or another derivative technology, naturally, integration of the functional blocks may be performed using this technology. For example, it is possible that biotechnology may be adapted for use.

### INDUSTRIAL APPLICABILITY

The communication handover method, the communication message processing method and the communication control method of the present invention provide effects that, when a mobile node performs a handover between access points present on the links of different access routers, security between the mobile node and an access point can be quickly established, so as to reduce the possibility of communication delays or disconnections due to the handover, and can be applied for a technique associated with a handover for a mobile node that performs radio communication, especially for a technique associated with a mobile node that performs radio communication using mobile IPv6.

## Claims

1. A communication handover method, whereby, in a communication system wherein a first access router, having a first access point at a lower rank, and a second access router, having a second access point at a lower rank, are connected via a communication network, a mobile node performs a handover from the first access point to the second access point, comprising:
a handover determination step of the mobile node, which is connected to the first access point and uses a communication encryption/decryption key in common with the first access point, and which is currently performing encrypted communication with the first access point using the communication encryption/decryption key, determining the performance of the handover from the first access point to the second access point, and obtaining, from the second access point, identification information for the second access point;
a first notification step of the mobile node transmitting to the first access router, via the first access point, a notification indicating the identification information for the second access point, identification information for the mobile node, and the communication encryption/decryption key related to encrypted communication with the first access point;
a second notification step of the first access router identifying the second access router based on the identification information, for the second access point, that is transmitted by the mobile node, and transmitting, to the second access router, a notification indicating the identification information for the mobile node and the communication encryption/decryption key related to encrypted communication with the first access point;
a third notification step of the second access router transmitting to the second access point a notification indicating the identification information for the mobile node and the communication encryption/decryption key related to encrypted communication with the first access point, all of which are transmitted by the first access router;
a comparison step of the second access point employing the identification information for the mobile node to identify the mobile node that is to be connected to the second access point as a result of the handover, and comparing, with the identification information for the mobile node that is transmitted by the second access router at the third notification step, the identification information for the mobile node that is to be connected to the second access point; and
a communication control step, based on the comparison results obtained at the comparison step, of the second access point employing the communication encryption/decryption key, used for encrypted communication between the mobile node and the first access point, and performing encrypted communication with the mobile node that has identification information that matches the identification information for the mobile node transmitted by the second access router, and permitting the mobile node to access the second access router.

2. The communication handover method according to claim 1, further comprising:
an authentication successful communication step, when an authentication process for the mobile node is performed parallel to encrypted communication with the mobile node at the communication control step and when the mobile node is authenticated and a new communication encryption/decryption key is generated for encrypted communication between the mobile node and the second access point, of the second access point performing encrypted communication with the mobile node using the new communication encryption/decryption key and continuing a control process that allows the mobile node to access the second access router; and
an authentication failure communication step, when an authentication process for the mobile node is performed in parallel to encrypted communication with the mobile node at the communication control step and when the mobile node has not been authenticated, of the second access point performing a control process to inhibit access by the mobile node of the second access router.

3. The communication handover method according to claim 1, whereby, at the first notification step, the mobile node transmits, to the first access router, an RtSolPr message or an FBU message for FMIP, in which the identification information, for the mobile information and the communication encryption/decryption key related to encrypted communication with the first access point, are embedded.

4. The communication handover method according to claim 1, whereby, at the second notification step, the first access router transmits to the second access router an HI message of FMIP that includes the identification information for the mobile node and the communication encryption/decryption key related to encrypted communication with the first access point.

5. A communication handover method, for a mobile node that performs a handover from a first access point to a second access point, in a communication system wherein a first access router, having the first access point at a lower rank, and a second access router, having the second access point at a lower rank, are connected via a communication network, comprising:
a handover determination step of, under a condition wherein a connection to the first access point is established, a communication encryption/decryption key is employed in common with the first access point and encrypted communication is currently performed with the first access point using the communication encryption/decryption key, determining the performance of the handover from the first access point to the second access point, and obtaining, from the second access point, identification information for the second access point;
a notification step of transmitting to the first access router, via the first access point, a notification indicating the identification information for the second access point, identification information for the mobile node, and the communication encryption/decryption key related to encrypted communication with the first access point;
a communication step of, when connection to the second access point is established by means of the handover, employing the communication encryption/decryption key related to encrypted communication with the first access point and performing encrypted communication with the second access point that has received, from the first access router via the second access router, the identification information for the mobile node and the communication encryption/decryption key related to encrypted communication with the first access point.

6. The communication handover method according to claim 5, further comprising:
an authentication successful communication step, when an authentication process for the mobile node is performed parallel to encrypted communication with the mobile node at the communication step and when the mobile node is authenticated and a new communication encryption/decryption key is generated for encrypted communication with the second access point, of the mobile node performing encrypted communication with the second access point using the new communication encryption/decryption key and continuing a control process that allows the mobile node to access the second access router.

7. The communication handover method according to claim 5, further comprising a step of:
generating a RtSolPr message or an FBU message for FMIP, in which the identification information for the mobile node and the communication encryption/decryption key related to encrypted communication with the first access point are embedded,
whereby, at the notification step, the RtSolPr message or the FBU message is transmitted to the first access router.

8. A communication message processing method for an access router, whereby in a communication system wherein a first access router having a first access point at a lower rank and a second access router having a second access point at a lower rank are connected via a communication network, a mobile node performs a handover from the first access point to the second access point, comprising:
a reception step of receiving, from the mobile node, identification information for the second access point, identification information for the mobile node, and a communication encryption/decryption key related to encrypted communication with the first access point;
a connection destination determination step of determining the second access router based on the identification information for the second access point; and
a notification step of transmitting to the second access router, as determined at the connection destination determination step, a notification indicating the identification information for the mobile node and the communication encryption/decryption key related to encrypted communication with the first access point.

9. The communication message processing method according to claim 8, whereby, at the reception step, a RtSolPr message or an FBU message for FMIP, in which the identification information for the mobile node and the communication encryption/decryption key related to encrypted communication with the first access point are embedded, is received from the mobile node.

10. The communication message processing method according to claim 8, further comprising a step of:
generating an HI message for FMIP, in which the identification information for the mobile node and the communication encryption/decryption key related to encrypted communication with the first access point are embedded,
whereby, at the notification step, the HI message is transmitted to the second access router.

11. A communication message processing method for a second access router, whereby in a communication system wherein a first access router having a first access point at a lower rank and the second access router having a second access point at a lower rank are connected via a communication network, a mobile node performs a handover from the first access point to the second access point, comprising:
a reception step of receiving, from the first access router, identification information for the mobile node and a communication encryption/decryption key related to encrypted communication with the first access point; and
a notification step of transmitting to the second access point, a notification indicating the identification information for the mobile node, received from the first access router and the communication encryption/decryption key related to encrypted communication with the first access point.

12. The communication message processing method according to claim 11, whereby, at the reception step, an HI message for FMIP, in which the identification information for the mobile node and the communication encryption/decryption key related to encrypted communication with the first access point are embedded, is received from the first access router.

13. The communication message processing method according to claim 11, further comprising a step of:
generating a notification message, in which the identification information for the mobile node and the communication encryption/decryption key related to encrypted communication with the first access point are embedded,
whereby, at the notification step, the notification message is transmitted to the second access point.

14. A communication control method for a second access point, whereby, in a communication system wherein a first access router, having a first access point at a lower rank, and a second access router, having the second access point at a lower rank, are connected via a communication network, a mobile node performs a handover from the first access point to the second access point, comprising:
a reception step of the second access router receiving, from the second access router, identification information for the mobile node and a communication encryption/decryption key related to encrypted communication with the first access point, which have been transmitted by the first access router;
a comparison step of employing the identification information for the mobile node to identify the mobile node that is to be connected to the second access point as a result of the handover, and comparing, with the identification information for the mobile node that is transmitted by the second access router at the reception step, the identification information for the mobile node that is to be connected to the second access point; and
a communication control step, based on the comparison results obtained at the comparison step, of employing the communication encryption/decryption key, used for encrypted communication between the mobile node and the first access point, and performing encrypted communication with the mobile node that has identification information that matches the identification information for the mobile node transmitted by the second access router, and permitting the mobile node to access the second access router.

15. The communication control method according to claim 14, further comprising:
an authentication successful communication step, when an authentication process for the mobile node is performed parallel to encrypted communication with the mobile node at the communication control step and when the mobile node is authenticated and a new communication encryption/decryption key is generated for encrypted communication between the mobile node and the second access point, of performing encrypted communication with the mobile node using the new communication encryption/decryption key and continuing a control process that allows the mobile node to access the second access router; and
an authentication failure communication step, when an authentication process for the mobile node is performed in parallel to encrypted communication with the mobile node at the communication control step and when the mobile node has not been authenticated, of performing a control process to inhibit access by the mobile node of the second access router.
